# EUROPÄISCHE PATENTSCHRIFT

(11) **EP 0 751 825 B1**
(45) Veröffentlichungstag und Bekanntmachung des Hinweises auf die Patenterteilung: **22.07.1998**
(21) Anmeldenummer: 95910560.2
(22) Anmeldetag: 07.03.1995
(51) Int. Cl.: B01J 38/68

(54) **VERFAHREN ZUM HERSTELLEN EINES KATALYTISCHEN KONVERTERS**
PROCESS FOR PRODUCING A CATALYTIC CONVERTER
PROCEDE DE FABRICATION D'UN CONVERTISSEUR CATALYTIQUE

(30) Priorität: 21.03.1994 DE 4409625
(43) Veröffentlichungstag der Anmeldung: 08.01.1997
(73) Patentinhaber: Emitec Gesellschaft für Emissionstechnologie mbH, 53797 Lohmar (DE); DAIMLER-BENZ AKTIENGESELLSCHAFT, 70567 Stuttgart (DE)
(72) Erfinder: ZAHN, Wolfgang, D-71640 Ludwigsburg (DE); MAUS, Wolfgang, D-51429 Bergisch Gladbach (DE)
(74) Vertreter: Kahlhöfer, Hermann, Dipl.-Phys.
(86) Internationale Anmeldenummer: EP9500840
(87) Internationale Veröffentlichungsnummer: WO9525591

(56) Entgegenhaltungen:
- EP-A- 0 241 310
- EP-A- 0 472 853
- EP-A- 0 566 878
- DE-A- 1 905 563

## Beschreibung

Die vorliegende Erfindung bezieht sich auf ein Verfahren zum Herstellen eines katalytischen Konverters, bestehend aus einem Wabenkörper mit Strömungskanälen, die katalytisch aktive Oberflächen haben.

Im Stand der Technik ist bekannt, auf welche Weise auf einen Wabenkörper mit Strömungskanälen katalytisch aktive Materialien auf die Oberflächen der Strömungskanäle aufgebracht werden können. Der Wabenkörper besteht dabei im wesentlichen aus einem metallischen oder keramischen Trägermaterial. Auf das Trägermaterial wird typischerweise eine poröse, die aktive Oberfläche vergrößernde Zwischenschicht (washcoat) aufgebracht. Auf diese Weise wird die geometrische Oberfläche der Strömungskanäle um mehrere Größenordnungen vervielfacht. Auf die so entstandene aktive Oberfläche wird dann ein katalytisch aktives Material aufgebracht. Verbrennungsabgase, z.B. von einem Kraftfahrzeugmotor, werden durch die Strömungskanäle geleitet, und bestimmte Stoffanteile des Verbrennungsabgases werden durch die katalytische Wirkung im Bereich der beschichteten Oberflächen umgesetzt, typischerweise exotherm, so daß am Auslaß der Strömungskanäle ein katalytisch behandeltes Verbrennungsabgas austritt.

Die katalytische Wirkung eines so gestalteten katalytischen Konverters hält jedoch nicht uneingeschränkt vor, obwohl die katalytisch aktiven Materialien selbst nicht umgesetzt werden. Dies beruht auf verschiedenen Mechanismen. Zum einen enthält das Verbrennungsabgas typischerweise einen, wenn auch geringen, Anteil an Partikeln, die sich in den Strömungskanälen ablagern können und dadurch die aktive Oberfläche des katalytischen Konverters verkleinern. D.h, die Hohlräume der porösen Zwischenschicht werden mit Fremdmaterialien aufgefüllt. Der freie Querschnitt der Strömungskanäle bleibt dabei sogar unbeeinträchtigt. Oft enthält das Verbrennungsabgas auch geringe Anteile an Substanzen, die die katalytische Wirkung der Katalysatormaterialien hemmen. Ablagerungen von solchen Substanzanteilen im Wabenkörper des katalytischen Konverters können zu einem vollständigen Ausfall (Vergiftung) führen. Des weiteren ist der katalytische Konverter ständigen mechanischen Belastungen ausgesetzt, und zwar in Form von Vibrationen (insbesondere beim Einsatz in Kraftfahrzeugen) sowie thermischer Expansion und Kontraktion (durch ständig wechselnde Betriebsbedingungen, insbesondere durch aufeinanderfolgende Stillstands- und Betriebszeiten). Dies kann dazu führen, daß sich Teile der porösen Zwischenschicht vom Trägerkörper ablösen, wodurch wiederum ein Teil der aktiven Oberfläche verloren-geht. Schließlich führen die hohen Temperaturen aufgrund der exothermen Umsetzung eines Stoffanteiles des Verbrennungsabgases zu einer Verglasung der porösen Zwischenschicht. Extrem hohe Temperaturen können z.B. durch eine ungenügende Verbrennung in der Verbrennungskraftmaschine verursacht werden, da dann ein Teil der Verbrennung auf katalytische Weise in dem katalytischen Konverter stattfindet. Die allmähliche Verglasung der porösen Zwischenschicht bewirkt, daß das Verbrennungsabgas tieferliegende Hohlräume in der porösen Zwischenschicht nicht mehr erreichen kann. Die aktiven Oberflächen dieser Hohlräume stehen dann nicht mehr für die katalytische Umsetzung zur Verfügung und verringern somit die aktive Gesamtoberfläche.

Die einzelnen Bestandteile eines katalytischen Konverters haben jedoch unterschiedliche Lebensdauern. Während das katalytische Material prinzipiell nicht verbraucht wird, geht es jedoch für die Wirksamkeit des katalytischen Konverters aus obigen Gründen im Laufe der Betriebszeit allmählich verloren. Die Wirksamkeit des katalytischen Konverters wird damit in erster Linie von der Integrität der porösen Zwischenschicht bestimmt. Insbesondere ist zu einem Zeitpunkt, wenn der katalytische Konverter in dem Kraftfahrzeug z.B. aufgrund von gesetzlichen Bestimmungen, erneuert werden muß, der Trägerkörper noch intankt. Insbesondere metallische Trägerkörper können eine Lebensdauer haben, die häufig doppelt so lang ist wie die Lebensdauer der porösen Zwischenschicht.

Die noch junge Technik der Katalysatoren für Kraftfahrzeuge hat bisher gezeigt, daß die Lebensdauer des katalytischen Konverters zum Teil recht deutlich unter der Lebensdauer des Kraftfahrzeuges liegt, in das der Katalysator eingebaut ist. Die Lebensdauer des Katalysators entsprach dabei bis vor kurzem noch einer Fahrleistung des Kraftfahrzeuges von nur etwa 50.000 km. Es ist gängige Praxis einen katalytischen Konverter am Ende seiner Lebensdauer einem Verfahren zuzuführen, mit dem die Edelmetalle wiedergewonnen werden können. Beispiele solcher Verfahren finden sich in der DE-A-41 05 224 und der DE-A-41 22 717. Die vorgeschlagenen Verfahren konzentrieren sich auf das Wiedergewinnen der Edelmetallbestandteile, da diese einen nicht unerheblichen Wert darstellen. Dabei können aber auch die übrigen Metallanteile einer Rohstoffrückgewinnung zugeführt werden.

Aus der DE-OS 19 05 563 ist es auch schon bekannt, die Aktivität eines Silberkristallkatalysators wiederherzustellen, indem dessen Oberfläche abgetragen und durch eine neue Oberfläche aus frischen Silberkristallen ersetzt wird. Der in dieser Schrift beschriebene Katalysator ist allerdings nicht auf einem Wabenkörper mit Strömungskanälen angeordnet, sondern direkt zu einer porösen Platte zusammengesintert.

Die EP-A 241 310 beschreibt die Regenerierung eines deaktivierten Wabenkatalysators, wobei dieser mit einem abrasiven Material behandelt wird (z.B. Sandstrahlen). Dabei wird die Oberfläche von abgelagerten Fremdmaterialien gereinigt und ein Teil der aktiven Schicht abgeschliffen, wodurch die katalytische Aktivität weitgehend wiederhergestellt wird.

Es ist das Ziel der vorliegenden Erfindung ein Verfahren bereitzustellen, bei dem nicht nur ein Großteil der verwendeten Rohstoffe einem Rohstoffkreislauf erhalten bleiben, sondern bei dem auch der Aufwand an Energie und Arbeitsleistung, die bei der Herstellung des katalytischen Konverters aufgebracht werden mußte, möglichst weitgehend erhalten bleibt.

Das Ziel der Erfindung wird erreicht durch ein Verfahren mit den Merkmalen des Anspruches 1. Vorteilhafte Ausgestaltungen des erfindungsgemäßen Verfahrens sind in den Unteransprüchen 2 bis 10 angegeben.

Die Erfindung beruht auf dem Ergebnis neuerer Entwicklungen, insbesondere im Bereich der Katalysatoren mit metallischen Wabenkörpern, daß die Lebensdauer von entsprechend 100.000 km und mehr Fahrleistung eines Kraftfahrzeuges möglich sind. Damit haben solche Katalysatoren häufig längere Lebensdauern als ein Kraftfahrzeug betrieben wird.

Erfindungsgemäß wird zunächst ein katalytischer Konverter, der bereits in Gebrauch gewesen ist, von Fremdmaterialien gereinigt. Die Gebrauchszeit ist dabei grundsätzlich nicht von entscheidender Bedeutung. In einem weiteren Schritt werden die katalytisch aktiven Oberflächen des katalytischen Konverters wiederhergestellt. Auf diese Weise entsteht ein katalytischer Konverter, der sich in seiner Funktion nicht von einem katalytischen Konverter unterscheidet der nach einem herkömmlichen Verfahren hergestellt worden ist. Es ist der besondere Vorteil dieses Verfahrens, daß die Trägerstruktur des gebrauchten katalytischen Konverters, insbesondere eine metallische Trägerstruktur bei der Ausführung des Verfahrens nicht zerstört wird und somit zumindest der Trägerkörper zur Herstellung eines katalytischen Konverter zur Verfügung steht. Da sich bei der Herstellung eines katalytischen Konverters nach dem erfindungsgemäßen Verfahren gegenüber herkömmlichen Herstellungsverfahren eine Vielzahl von Verfahrensschritten erübrigen, kann dadurch ein erheblicher Kostenvorteil erzielt werden. Das erfindungsgemäße Verfahren beinhaltet ein Auftragen einer katalytisch aktiven Oberflächenbeschichtung. Wenn die Integrität der porösen Zwischenschicht des bei der Ausführung verwendeten katalytischen Konverters, der bereits in Gebrauch gewesen ist, noch weitgehend erhalten war, kann auf diese einfache Weise die volle katalytische Wirkung des katalytischen Konverters wiederhergestellt werden. Der dabei entstehende Materialaufwand an Edelmetallen ist unter dem Gesichtspunkt des sparsamen Umgangs mit Rohstoffen unerheblich, da sie in jedem Fall zu einem späteren Zeitpunkt großenteils wieder zurückgewonnen werden können.

In einem bevorzugten Ausführungsbeispiel des Verfahrens wird vor der Edelmetallbeschichtung eine poröse Zwichenschicht aufgetragen. Diese Vorgehensweise ist besonders dann vorteilhaft, wenn größere Teile der porösen Zwischenbeschichtung des gebrauchten katalytischen Konverters beschädigt sind.

In einem weiteren bevorzugten Ausführungsbeispiel der vorliegenden Erfindung wird nach dem Schritt des Reinigens ein Schritt des Entfernens einer vorhandenen Beschichtung ausgeführt. Dieses Verfahren ist besonders dann vorteilhaft, wenn eine existierende Beschichtung auf dem gebrauchten katalytischen Konverter zum Auftragen einer katalytisch aktiven Oberflächenbeschichtung nicht mehr geeignet ist. Es hat den Vorteil, daß dabei die ursprüngliche poröse Zwischenschicht mit der eingelagerten katalytisch aktiven Edelmetalloberfläche vollständig aus dem gebrauchten katalytischen Konverter entfernt wird und die darin enthaltenen Edelmetalle wiedergewonnen werden. Es kann dann eine völlig neue Beschichtung des katalytischen Konverters nach einem herkömmlichen Verfahren erfolgen. Möglichkeiten zum Reinigen und/oder Beseitigen einer vorhandenen Beschichtung sind beispielsweise Anwenden von Ultraschall, Fluten des Wabenkörpers mit einer chemisch oder mechanisch aktiven Flüssigkeit, Wärme- oder Kältebehandeln des gebrauchten katalytischen Konverters. Die verschiedenen Möglichkeiten können einzeln oder in beliebiger Kombination eingesetzt werden.

Die Ausführung eines Verfahrens mit der Erfindung erfordert nur einen relativ geringen Energie- und Arbeitsaufwand und unterscheidet sich beträchtlich von dem, der bei der herkömmlichen Verwertung gebrauchter katalytischer Konverter aufgebracht werden muß. Es besteht ferner ein Vorteil gegenüber den herkömmlichen Herstellungsverfahren für katalytische Konverter, insbesondere solchen mit metallischen Trägerkörpern, da zumindest die Bereitstellung eines Trägerkörpers nicht erforderlich ist. Demzufolge ergibt sich der Vorteil, daß sich der Wert eines in Gebrauch befindlichen katalytischen Konverters nicht nur nach dessen Edelmetallgehalt bemißt, sondern darüber hinausgehend auch nach seiner wie oben beschriebenen Wiederverwertbarkeit zur Herstellung eines neuen katalytischen Konverters.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. In der Zeichnung zeigen:
- Fig. 1: eine schematisierte Teilschnittansicht eines voll funktionsfähigen Wabenkörpers;
- Fig. 2: eine schematisierte Teilschnittansicht eines gebrauchten Wabenkörpers; und
- Fig. 3: einen unbeschichteten Trägerkörper.

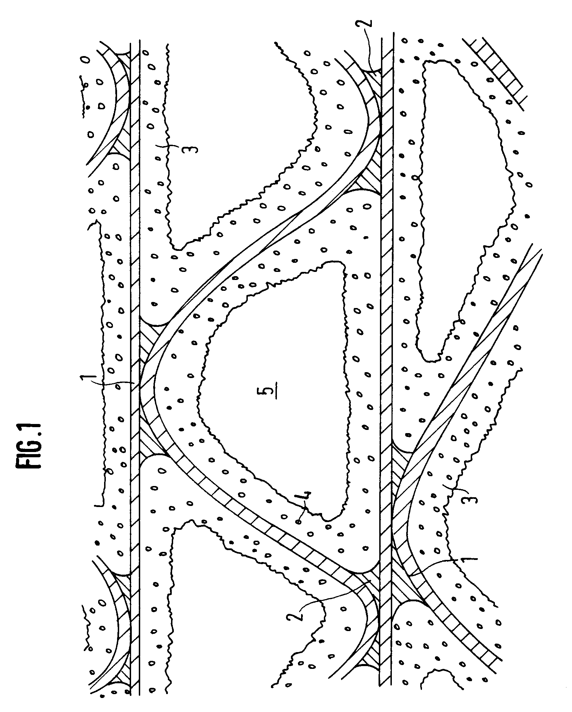

In Fig. 1 ist ein Wabenkörper gezeigt, der eine metallische Trägerstruktur 1 aufweist. Die metallische Trägerstruktur 1 besteht dabei aus Lagen abwechselnd glatter und gewellter Bleche. Die einzelnen Lagen sind im Bereich ihrer Kontaktstellen 2 untereinander verlötet. Durch die Stapelung von abwechselnd glatten und gewellten Blechen entstehen Strömungskanäle 5, durch die ein Verbrennungsabgas geleitet werden kann. Die Strömungskanäle 5 sind an ihren Wänden mit einer porösen Schicht 3 ausgekleidet. Die poröse Schicht 3 hat eine Vielzhal von Hohlräumen 4, die direkt oder indirekt mit dem Strömungskanal 5 in Verbindung stehen. Die poröse Schicht 3 dient dabei im wesentlichen als Trägersubstanz für eine katalytisch aktive Beschichtung. Diese Beschichtung wird auf die Gesamtoberfläche, d.h. einschließlich der Oberflächen der zugänglichen Hohlräume 4, aufgetragen. Die beschichtete Gesamtoberfläche ist dabei um ein Vielfaches größer als die Oberflächen der Innenwände der Strömungskanäle 5 insgesamt. In Fig. 1 ist die Porösität der Schicht 3 nicht im einzelnen dargestellt, sondern wird durch das angegebene Muster und eine angedeutete Rauheit der Oberfläche der porösen Schicht 3 veranschaulicht.

In Betrieb gelangt das Verbrennungsabgas, das durch die Strömungskanale 5 strömt, mit der Gesamtoberfläche der katalytischen Beschichtung in Berührung, wobei bestimmte Anteile des Verbrennungsabgases dabei katalytisch umgesetzt werden. Die Umsetzung erfolgt typischerweise exotherm und führt daher zu einer hohen Temperatur des Waberkörpers im Bereich von 400°C bis 700°C.

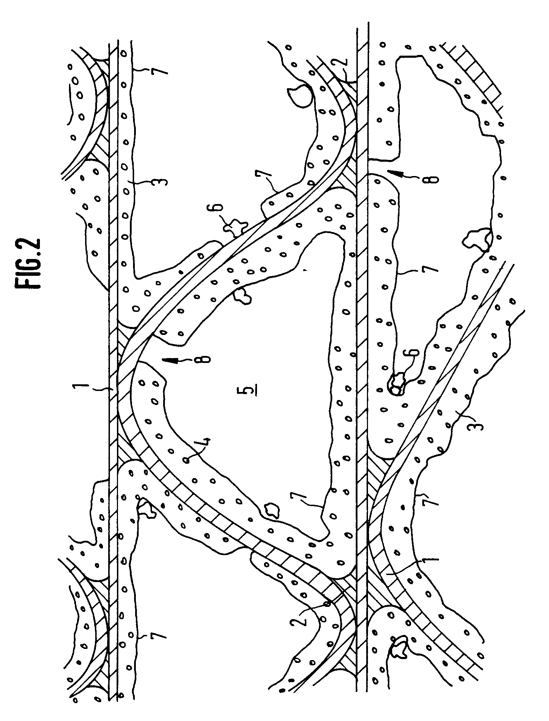

Fig. 2 zeigt den gleichen Teilquerschnitt aus dem Wabenkörper wie Fig. 1, nachdem der Wabenkörper für eine gewisse Zeit betrieben worden ist. An verschiedenen Stellen sind Partikel 6 gezeigt, die typischerweise in einem Verbrennungsabgas enthalten sind und die sich vorzugsweise in verengenden Abschnitten des Wabenkörpers festsetzen. Diese Partikel 6 behindern den Zugang des Verbrennungsabgases zu tieferliegenden Hohlräumen 4 in der porösen Schicht 3 und verringern somit die Wirksamkeit des katalytischen Konverters. Fig. 2 zeigt auch Schadstellen 8 in der porösen Schicht 3. Diese Schadstellen 8 entstehen durch verschiedene mechanische Einwirkungen auf den Wabenkörper, wobei Teile der porösen Schicht 3 stückweise abgelöst und von der Abgasströmung abgeführt werden. Auf diese Weise verringert sich die katalytisch aktive Gesamtoberfläche des katalytisch Konverters. Schließlich ist in Fig. 2 auch veranschaulicht, daß die poröse Schicht 3 durch Einwirkung hoher Temperaturen eine glasierte Oberfläche 7 haben kann. Durch diese Verglasung 7 wird die Verbindung zu tieferliegenden Hohlräumen 4 in der porösen Schicht 3 mit dem jeweiligen Strömungskanal 5 abgeschnitten. Dies hat zur Folge, daß die, obwohl intakte katalytisch aktive Oberfläche, nicht mehr von dem Verbrennungsabgas angeströmt wird. Die Wirksamkeit eines solchen katalytischen Konverters kann dadurch beträchtlich herabgesetzt sein.

Es wird angemerkt, daß die beschriebenen Ausfallmechanismen nicht alle zugleich auftreten müssen, sondern daß diese auch einzeln oder in beliebiger Kombination auftreten können. Es wird auch darauf hingewiesen daß sich die Schädigung nicht einheitlich über Länge des Wabenkörpers erstrecken muß. Da typischerweise die katalytische Umsetzung bevorzugt in bestimmten Längenabschnitten des Wabenkörpers stattfindet, ist eine Beschädigung in erster Linie in diesen Längenabschnitten zu erwarten.

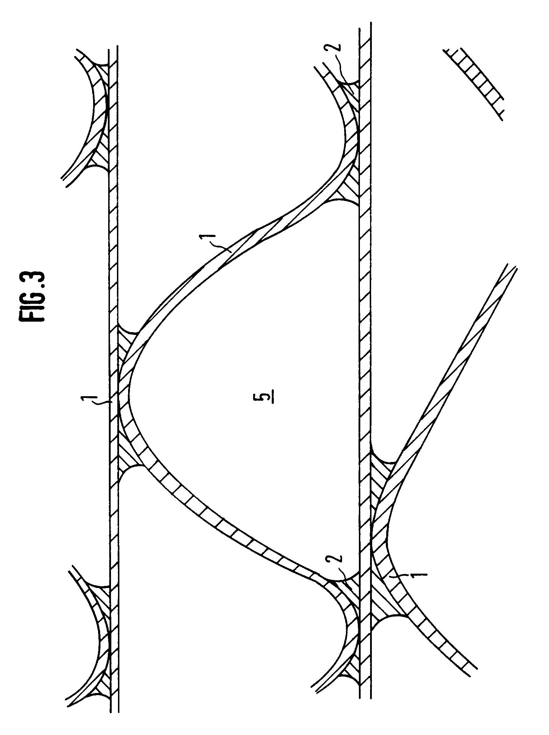

Fig. 3 zeigt einen Wabenkörper, der durch ein bevorzugtes Ausführungsbeispiel des Verfahrens von allen Materialien befreit wurde, so daß der Wabenkörper als verlötete Trägerstruktur 1 zur Verfügung steht. Zum Erhalten einer Trägerstruktur 1 gemäß Fig. 3 wird der Wabenkörper von allen Fremdmaterialien gereinigt und die poröse Zwischenschicht entfernt. Dazu eignen sich beispielsweise eine Ultraschallbehandlung, eine Behandlung unter extrem und sich kurzzeitig ändernden Temperaturen, eine chemische Behandlung und/oder eine Behandlung mit Flüssigkeiten, in der Schleifpartikel suspendiert sind. Durch Auftragen einer neuen porösen Schicht 3 und durch nachfolgendes Beschichten mit einem katalytisch aktiven Material kann ein Wabenkörper mit Strukturen ähnlich denen von Fig. 1 erhalten werden.

## Patentansprüche

1. Verfahren zum Herstellen eines katalytischen Konverters, bestehend aus einem Wabenkörper mit Strömungskanälen (5), die katalytisch aktive Oberflächen (3, 4) haben, wobei das Verfahren aufweist:
- Reinigen des Wabenkörpers eines in Gebrauch gewesenen katalytischen Konverters ganz oder teilweise von Fremdmaterialien (6);
- Wiederherstellen der katalytisch aktiven Oberflächen (3, 4) des katalytischen Konverters durch Auftragen einer katalytisch aktiven Oberflächenbeschichtung.

2. Verfahren nach Anspruch 1, dadurch gekennzeichnet, daß vor dem Schritt des Auftragens einer katalytisch aktiven Oberflächenbeschichtung ein Auftragen einer porösen Zwischenschicht (3) erfolgt.

3. Verfahren nach einem der Ansprüche 1 bis 2, dadurch gekennzeichnet, daß nach dem Schritt des Reinigens ein Schritt des Entfernens einer vorhandenen Beschichtung (7, 3) erfolgt.

4. Verfahren nach einem der vorhergehenden Ansprüche, dadurch geKennzeichnet, daß der Schritt des Reinigens einen Schritt des Behandelns des Wabenkörpers mit Ultraschall aufweist.

5. Verfahren nach einem der vorhergehenden Ansprüche, dadurch gekennzeichnet, daß der Schritt des Reinigens einen Schritt des Flutens der Kanäle (5) des Wabenkörper mit einer Flüssigkeit aufweist.

6. Verfahren nach Anspruch 5, dadurch gekennzeichnet, daß die Flüssigkeit Substanzen enthält, die ein Lösen der Fremdmaterialien (6) und/oder der Beschichtungen (9, 3) bewirken.

7. Verfahren nach Anspruch 6, dadurch gekennzeichnet, daß die Substanzen chemisch aktiv sind.

8. Verfahren nach Anspruch 6, dadurch gekennzeichnet, daß die Substanzen mechanisch auf die Fremdmaterialien (6) und/oder Beschichtugen (7, 3) einwirken.

9. Verfahren nach einem der vorhergehenden Ansprüche, dadurch gekennzeichnet, daß vor dem Schritt des Wiederbeschichtens Schritte des Wärmebehandelns erfolgen.

10. Verfahren nach Anspruch 9, dadurch gekennzeichnet, daß die Schritte des Wärmebehandelns ein Fluten des katalytischen Konverters mit Fluiden extrem unterschiedlicher Temperatur aufweisen.

## Claims

1. A process for the production of a catalytic converter comprising a honeycomb body having flow passages (5) which have catalytically active surfaces (3, 4), wherein the process comprises:
- entirely or partially cleaning foreign materials (6) from the honeycomb body of a catalytic converter which has been in use; and
- restoring the catalytically active surfaces (3, 4) of the catalytic converter by applying a catalytically active surface coating.

2. A process according to claim 1 characterised in that the step of applying a catalytically active surface coating is preceded by an operation of applying a porous intermediate layer (3).

3. A process according to one of claims 1 and 2 characterised in that the cleaning step is followed by a step for the removal of an existing coating (7, 3).

4. A process according to one of the preceding claims characterised in that the cleaning step includes a step for treating the honeycomb body with ultrasound.

5. A process according to one of the preceding claims characterised in that the cleaning step includes a step of flooding the passages (5) of the honeycomb body with a liquid.

6. A process according to claim 5 characterised in that the liquid contains substances which cause loosening of the foreign materials (6) and/or the coatings (7, 3).

7. A process according to claim 6 characterised in that the substances are chemically active.

8. A process according to claim 6 characterised in that the substances act mechanically on the foreign materials (6) and/or coatings (7, 3).

9. A process according to one of the preceding claims characterised in that the re-coating step is preceded by heat treatment steps.

10. A process according to claim 9 characterised in that the heat treatment steps include flooding the catalytic converter with fluids at extremely different temperatures.

## Revendications

1. Procédé destiné à la fabrication d'un convertisseur catalytique constitué d'un corps alvéolaire comportant des canaux de circulation (5) ayant des surfaces (3, 4) catalytiquement actives, le procédé comprenant :
- le nettoyage complet ou partiel du corps alvéolaire d'un convertisseur catalytique ayant été en service afin de le débarrasser de matières étrangères (6) ;
- la reconstitution des surfaces (3, 4) catalytiquement actives du convertisseur catalytique par l'application d'un revêtement de surface catalytiquement actif.

2. Procédé selon la revendication 1, caractérisé en ce qu'une couche intermédiaire poreuse (3) est appliquée avant la phase de l'application d'un revêtement de surface catalytiquement actif.

3. Procédé selon les revendications 1 et 2, caractérisé en ce que la phase de nettoyage est suivie d'une phase d'élimination d'un revêtement (7, 3) existant.

4. Procédé selon l'une quelconque des revendications précédentes, caractérisé en ce que la phase de nettoyage comporte une phase de traitement du corps alvéolaire aux ultrasons.

5. Procédé selon l'une quelconque des revendications précédentes, caractérisé en ce que la phase de nettoyage comporte une phase de remplissage des canaux (5) du corps alvéolaire avec un liquide.

6. Procédé selon la revendication 5, caractérisé en ce que le liquide contient des substances qui assurent une dissolution des matières étrangères (6) et/ou des revêtements (9, 3).

7. Procédé selon la revendication 6, caractérisé en ce que les substances sont chimiquement actives.

8. Procédé selon la revendication 6, caractérisé en ce que les substances agissent mécaniquement sur les matières étrangères (6) et/ou sur les revêtements (7, 3).

9. Procédé selon l'une quelconque des revendications précédentes, caractérisé en ce que des phases de traitement thermique sont effectuées avant la phase d'application du nouveau revêtement.

10. Procédé selon la revendication 9, caractérisé en ce que les phases de traitement thermique comportent un remplissage du convertisseur catalytique avec des fluides ayant des températures extrêmement différentes.
